# EUROPÄISCHE PATENTSCHRIFT

(11) **EP 4 241 864 B1**
(45) Veröffentlichungstag und Bekanntmachung des Hinweises auf die Patenterteilung: **26.11.2025**
(21) Anmeldenummer: 23159631.3
(22) Anmeldetag: 02.03.2023
(51) Int. Cl.: B01D 29/11

(54) **FILTEREINRICHTUNG**
FILTER DEVICE
DISPOSITIF DE FILTRATION

(30) Priorität: 09.03.2022 DE 102022202347
(43) Veröffentlichungstag der Anmeldung: 13.09.2023
(73) Patentinhaber: Filtration Group GmbH, 74613 Öhringen (DE)
(72) Erfinder: BAUTZ, Marco, 75015 Bretten (DE); DONAT, Elias, 74613 Öhringen (DE); ROSTOCKI, Jakob, 74248 Ellhofen (DE)
(74) Vertreter: BRP Renaud & Partner mbB Rechtsanwälte Patentanwälte Steuerberater

(56) Entgegenhaltungen:
- WO-A1-2008/022813
- DE-A1- 102017 005 619

## Beschreibung

Die vorliegende Erfindung betrifft eine Filtereinrichtung zum Filtern eines Fluids, insbesondere eine Hydraulikfiltereinrichtung, welche ein Gehäuse sowie ein austauschbar im Gehäuse aufgenommenes Filterelement aufweist.

Eine gattungsgemäße Filtereinrichtung dient dem Filtern eines Fluids, insbesondere von Flüssigkeiten. Zu diesem Zweck weist die Filtereinrichtung in der Regel ein Gehäuse auf, in welchem ein Filterelement austauschbar aufgenommenen ist.

Eine solche Filtereinrichtung ist beispielsweise aus der DE 10 2017 005 619 A1 bekannt. Die Filtereinrichtung weist ein Gehäuse mit einem Gehäusetopf und einem Gehäusekopf sowie ein im Gehäuse austauschbar aufgenommenes Filterelement auf. Die Filtereinrichtung weist ferner ein Halte- und Mitnahmesystem zum Halten und Mitnehmen des Filterelements auf. Das System besteht aus einer an einer inneren Zarge des Filterelements angebrachten und radial nach innen abstehenden Halte/Mitnahmeeinrichtung, einer am Filterelement vorgesehenen Durchführöffnung sowie einer am Gehäusekopf vorgesehenen, radial nach außen abstehenden Halte/Mitnahmeeinrichtung. Dabei wird das Filterelement am Gehäusekopf vormontiert und der Gehäusetopf anschließend axial über das Filterelement geschoben und mit dem Gehäusekopf lösbar verbunden.

Eine weitere Filtereinrichtung ist aus der WO 2008/022813 A1 bekannt.

Die vorliegende Erfindung beschäftigt sich mit der Aufgabe, für eine Filtereinrichtung der eingangs genannten Art eine verbesserte oder zumindest andere Ausführungsform anzugeben, welche insbesondere Nachteile aus dem Stand der Technik beseitigt. Insbesondere beschäftigt sich die vorliegende Erfindung mit der Aufgabe, für die Filtereinrichtung eine verbesserte oder zumindest andere Ausführungsform anzugeben, welche sich durch eine vereinfachte Montage der Filtereinrichtung und/oder vereinfachten Austausch des Filterelements auszeichnen.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht demnach auf dem allgemeinen Gedanken, ein Filterelement in einem Gehäusetopf eines Gehäuses einer Filtereinrichtung vorzumontieren und gemeinsam mit dem Gehäusetopf an einem Gehäusekopf des Gehäuses anzubringen, wobei das Vormontieren mittels radial vom Filterelement nach außen abstehenden sowie radial vom Gehäusetopf nach innen abstehenden zugehörigen Halteelementen erfolgt, welche das Filterelement im Gehäusetopf zentrieren und in Umfangsrichtung sowie axial zumindest einseitig halten. Durch das Zentrieren und Halten des Filterelements im Gehäusetopf erfolgt ein vereinfachtes, gemeinsames Anbringen des Filterelements mit dem Gehäusetopf am Gehäusekopf, sodass die Montage der Filtereinrichtung vereinfacht ist. Ferner ist auf diese Weise die benötigte Höhe zum Montieren der Filtereinrichtung reduziert. Ferner ist somit das Austauschen des Filterelements, welches das Anbringen eines neuen im Gehäusetopf vormontierten, Filterelements am Gehäusekopf umfasst, in einer zugehörigen Anwendung, beispielsweise in einem Kraftfahrzeug oder eine Werkzeugmaschine, mit reduziertem Bauraum möglich und vereinfacht. Durch das Halten des Filterelements in Umfangsrichtung ist das Filterelement ferner im Gehäusetopf gegenüber Drehungen gesichert, sodass auch das Entfernen des Filterelements vom Gehäusekopf gemeinsam mit dem Gehäusetopf auf definierte und zuverlässige Art und Weise erfolgt, auch wenn sich im Betrieb der Filtereinrichtung unerwünschte Reibungen und/oder Klemmungen zwischen dem Filterelement und dem Gehäusekopf ergeben. Derartige unerwünschte Reibungen und/oder Klemmungen können beispielsweise dadurch entstehen, dass in der Filtereinrichtung eingesetzte Dichtungen, beispielsweise durch Kontakt mit dem zu filternden Fluid, anschwellen.

Dem Erfindungsgedanken entsprechend weist die Filtereinrichtung das Gehäuse sowie das Filterelement auf. Das Gehäuse weist zwei Teile auf, welche nachfolgend auch als Gehäusetopf und Gehäusekopf bezeichnet werden. Der Gehäusetopf und der Gehäusekopf sind lösbar miteinander verbunden und begrenzen ein Volumen, in welchem das Filterelement austauschbar aufgenommenen ist. Der Gehäusetopf weist einen zum Gehäusekopf in einer Richtung beabstandeten Topfboden auf. Diese Richtung wird nachfolgend auch als Axialrichtung bezeichnet. Der Gehäusetopf weist ferner eine axial vom Topfboden abstehende und in einer Umfangsrichtung umlaufende Topfwand auf. Die Topfwand begrenzt eine axial dem Topfboden gegenüberliegende Topföffnung des Gehäusetopfs in Umfangsrichtung. Dabei ist das Filterelement im Gehäusetopf vormontiert und gemeinsam mit dem Gehäusetopf mit dem Gehäusekopf verbunden. Der Gehäusetopf und das Filterelement weisen in einem im Gehäusetopf vormontierten Zustand miteinander in Eingriff stehende, zugehörige Halteelemente auf, wobei das jeweilige Halteelement des Filterelements nachfolgend auch als Gegenhalteelement bezeichnet wird. Dabei weist der Gehäusetopf zumindest ein von der Topfwand radial nach innen abstehendes Halteelement und das Filterelement für das jeweilige Halteelement des Gehäusetopfs ein zugehöriges, radial nach außen abstehendes Gegenhalteelement auf. Das jeweilige Halteelement ist als eine Halterung und das zugehörige Gegenhalteelement als ein Vorsprung ausgebildet. Die jeweilige zumindest eine Halterung weist einen in Umfangsrichtung verlaufenden Halterungsgrund sowie zwei vom Halterungsgrund abstehende Schenkel auf, wobei die Schenkel in Umfangsrichtung gegenüberliegend angeordnet sind. Der jeweilige Vorsprung steht im in dem Gehäusetopf vormontierten Zustand mit der zugehörigen Halterung in Eingriff, derart, dass der Vorsprung auf dem zugehörigen Halterungsgrund axial aufliegt und mittels den zugehörigen Schenkeln in Umfangsrichtung fixiert ist, sodass das Filterelement im Gehäusetopf zentriert und axial hin zur Topföffnung gehalten ist.

Die vorliegend angegebenen Richtungen beziehen sich jeweils auf die Axialrichtung und somit auf die Richtung, in welcher der Topfboden und der Gehäusekopf zueinander beabstandet sind. Demgemäß bedeutet "axial" parallel oder koaxial zur Axialrichtung. Ferner bedeutet "radial" quer zur Axialrichtung und somit quer zur "axial". Ferner verläuft die Umfangsrichtung die Axialrichtung umgebend.

Bevorzugt entspricht die Axialrichtung der Längsmittelachse des Gehäuses, insbesondere des Gehäusetopfs und/oder des Filterelements.

Das Filterelement grenzt vorzugsweise ein inneres Volumen gegenüber einem Außenvolum ab, sodass das Fluid zum Filter von Außenvolumen in das innere Volumen oder umgekehrt strömt. Beim Filterelement handelt es sich somit insbesondere um ein ringartiges Filterelement, bevorzugt um ein Ringfilterelement

Es verstehe sich, dass das Gehäuse zusätzlich zum Gehäusetopf und Gehäusekopf auch weiterer Gehäuseteile aufweisen kann. Das Gehäuse weist also zumindest zwei Gehäuseteil auf.

Der jeweilige zumindest eine Schenkel kann beliebig geformt und ausgebildet sein.

Denkbar ist es, zumindest einen Schenkel als eine Nocke auszubilden.

Das Filterelement kann prinzipiell ein solches beliebiger Art sein.

Das Filterelement ist in dem im Gehäusetopf vormontierten Zustand vorzugsweise, zumindest überwiegend, bevorzugt gänzlich, im Gehäusetopf angeordnet. Dies führt zu einer reduzierten benötigten Höhe, insbesondere beim Austausch des Filterelements. Die Reduktion der für die Montage und die Demontage benötigten Höhe resultiert insbesondere aus der Tatsache, dass der Gehäusetopf nicht mehr wie im Stand der Technik über das, auf eine Aufnahme im Inneren des Gehäusekopfes aufgesteckte, Filterelemente hinwegbewegt werden muss.

Vorteilhaft weist der Gehäusetopf eine größere axiale Streckung auf als der Gehäusekopf. Dies führt zu einer kompakteren Ausbildung der Filtereinrichtung.

Die Schenkel der jeweiligen Halterung stehen, wie vorstehend erläutert, vom zugehörigen Halterungsgrund ab und sind in Umfangsrichtung gegenüberliegend angeordnet. Somit bildet die Halterung eine axial einseitig offene Aufnahme für den zugehörigen Vorsprung. Dabei kann die Halterung beispielsweise U-förmig ausgebildet sein und somit axial abstehende Schenkel aufweisen. Dies führt insbesondere zu einer einfachen und kostengünstigen Ausbildung der Halterung.

Zum Halten, insbesondere Fixieren, des Filterelements im Gehäusetopf in Umfangsrichtung dienen die Schenkel bevorzugt jeweils als ein Anschlag für den zugehörigen Vorsprung. Auf diese Weise wird eine Rotationsbewegung des Filterelements relativ zum Gehäusetopf verhindert oder zumindest reduziert. In anderen Worten führt eine Rotations- und Axialbewegung des Gehäusetopfes zu einer gleichförmigen Rotations- und Axialbewegung des Filterelements.

Die Filtereinrichtung kann prinzipiell zum Filtern eines beliebigen Fluids zum Einsatz kommen. Insbesondere kommt die Filtereinrichtung zum Filtern einer Flüssigkeit, wie eines Kühlschmierstoffes oder insbesondere eines Öls, beispielsweise zum Filtern einer Hydraulikflüssigkeit, zum Einsatz. Bei der Filtereinrichtung kann es sich demnach insbesondere um eine Hydraulikfiltereinrichtung handeln.

Das Filterelement weist eine hohlzylindrische Form auf und begrenzt somit in seinem radial Inneren ein Volumen, welches nachfolgend auch als Elementvolumen bezeichnet wird.

Das Filterelement weist zum Filtern des Fluids ein Filtermedium, beispielsweise gefaltetes oder gewickeltes Filterpapier, auf. Das Filtermedium verläuft bevorzugt in Umfangsrichtung geschlossen und erstreckt sich axial. Insbesondere begrenzt das Filtermedium das Elementvolumen radial nach außen.

Das Filterelement weist vorteilhaft an zumindest einer axialen Stirnseite eine Endscheibe auf, welche vorteilhaft mit dem Filtermedium verbunden ist. Bevorzugt ist es, wenn das Filterelement an beiden Stirnseiten eine solche Endscheibe aufweist. Das Filterelement weist also bevorzugt eine obere axiale Stirnseite sowie an der oberen axialen Stirnseite eine obere Endscheibe auf. Zudem weist das Filterelement bevorzugt eine untere axiale Stirnseite sowie an der unteren axialen Stirnseite eine untere Endscheibe auf.

Der Topfboden des Gehäusetops kann radial eben verlaufen.

Vorstellbar ist es auch, dass der Topfboden gekrümmt oder gewölbt verläuft. Insbesondere kann der Topfboden weg von der Topföffnung gekrümmt verlaufen. Dabei kann der Gehäusetopf insbesondere in der Art einer Glocke ausgebildet sein.

Zum Vormontieren des Filterelements im Gehäusetopf sind der Gehäusetopf und das Filterelement, insbesondere die zumindest eine Halterung und der zugehörige Vorsprung, derart ausgebildet, dass das Filterelement durch die Topföffnung axial in den Gehäusetopf eingeschoben und dann in einer bestimmten axialen Position in Umfangsrichtung gedreht wird. Ist der zumindest eine Vorsprung axial dem zugehörigen Halterungsgrund benachbart, so wird das Filterelement axial hin zur Topföffnung bewegt, sodass der jeweilige Vorsprung und die zugehörige Halterung in Eingriff stehen. Somit sind ein einfaches Vormontieren des Filterelements im Gehäusetopf sowie eine einfache und zuverlässige Zentrierung und Halten des Filterelements im Gehäusetopf erreicht. Zudem ist es auf diese Weise möglich, das Filterelement im Gehäusetopf mit einer gewünschten oder vorgegebenen Ausrichtung in Umfangsrichtung vorzumontieren.

Vorstellbar ist es, dass einer der Schenkel zumindest einer Halterung vom Halterungsgrund weiter absteht als der andere Schenkel der Halterung. Auf diese Weise kann der weiter abstehende Schenkel als ein Anschlag für den zugehörigen Vorsprung fungieren. Dies führt zu einer vereinfachten Montage der Filtereinrichtung und zu einem vereinfachten Austausch des Filterelements.

Die unterschiedlich weit abstehenden Schenkel können beispielsweise derart sein, dass der in Drehrichtung des Filterelements erste Schenkel weniger weit vom Halterungsgrund abstehend ist als der andere Schenkel. Beispielsweise bei einer Linksdrehung erfolgt die Montage dabei derart, dass das Filterelement zur Montage axial eingeschoben, dann rechts herum gedreht wird. Dabei bewegt sich der Vorsprung über den weniger weit abstehenden Schenkel hinweg bis er an den weiter abstehenden Schenkel anschlägt. Nun wird das Element in axialer Richtung vom Topfboden wegbewegt, bis es am Halterungsgrund anliegt.

Bei einer Ausbildung der Halterung am Gehäusetopf, kann sich der weiter abstehende Schenkel bis zum Topfboden erstrecken. Somit wird die Montage weiter vereinfacht.

Wie vorstehend erläutert, ist durch die axiale Auflage des zumindest einen Vorsprungs auf dem zugehörigen Halterungsgrund das Filterelement axial hin zur Topföffnung im Gehäusetopf gehalten. Dabei ist ein weiteres axiales Verschieben des Filterelements hin zur Topföffnung verhindert.

Bevorzugt ist die Filtereinrichtung derart ausgestaltet, dass das Filterelements auch axial von der Topföffnung abgewandt im Gehäusetopf gehalten ist.

Erfindungsgemäß weist die Filtereinrichtung zum axialen Halten des Filterelements von der Topföffnung abgewandt ein verstellbares Fixierelement auf. Das Fixierelement ist dabei hin zum Filterelement verstellbar, wobei es im hin zum Ringfilterelement verstellten Zustand des Filterelements axial von der Topföffnung abgewandt im Gehäusetopf hält. Das heißt, dass das Filterelements im hin zum Filterelements verstellten Zustand des Fixierelements mittels des Fixierelements axial von der Topföffnung abgewandt im Gehäusetopf gehalten ist. Somit ist eine einfache und sichere axiale Halterung des Filterelements im Gehäusetopf erreicht. Zudem lässt sich das Filterelements auf diese Weise im vom Filterelements weg verstellten Zustand des Fixierelements vereinfacht montieren und/oder austauschen.

Bei bevorzugten Ausführungsformen ist des Fixierelement durch axial verstellbar. Bevorzugt ist es ferner, wenn das Fixierelement durch eine Öffnung das Gehäusetopfs verstellbar ist.

Bei bevorzugten Ausführungsbeispielen ist das Fixierelement am Gehäusetopf, vorteilhaft am Topfboden, axial verstellbar angeordnet. Das Fixierelement lässt sich also insbesondere axial hin zur Topföffnung verstellen. Dabei ist das Filterelement mittels des Fixierelements axial von der Topföffnung abgewandt im Gehäusetopf gehalten. Somit ist das Filterelement also im vormontierten Zustand axial beidseitig im Gehäusetopf gehalten. Dies führt zu einer weiter vereinfachten Montage und/oder zu einem weiter vereinfachten Austausch des Filterelements.

Das Fixierelement dient bevorzugt als ein axialer Anschlag für das Filterelement. Dieser Anschlag verhindert, dass der Vorsprung des Filterelementes axial aus der Halterung herausbewegt wird. Vorteilhaft ist dabei im vormontierten Zustand ein axiales Spiel zwischen dem Fixierelement und dem Filterelement möglich.

Bevorzugt wirkt das Fixierelement mit der oberen Endscheibe des Filterelements zusammen. Das heißt, dass das Fixierelement bevorzugt als ein axialer Anschlag für die obere Endscheibe fungiert. Somit werden insbesondere Beschädigungen des Filtermediums verhindert oder zumindest reduziert, da keine zusätzlichen Kontaktpunkte mit dem Filtermedium bestehen. Hierbei ist es vorteilhaft, wenn das axial verstellbare Fixierelement im Bereich zwischen der dem Topfboden zugewandten Endscheibe des Filterelementes und dem Topfboden platziert ist.

Bei vorteilhaften Varianten ist das Fixierelement nach dem Bewegen des Filterelements axial hin zur Topföffnung axial hin zum Filterelement verstellt, um das Filterelement axial von der Topföffnung abgewandt im Gehäusetopf zu halten. Das heißt, dass das Fixierelement erst nach dem Eingriff des zumindest einen Vorsprung mit der zugehörigen Halterung axial hin zur Topföffnung verstellt ist, sodass das Fixierelement das Filterelement im Gehäusetopf axial von der Topföffnung abgewandt hält.

Der Topfboden weist vorteilhaft eine Öffnung auf, welche beispielsweise zum Belüften und/oder Entlüften und/oder zum Befüllen des Volumens zum Einsatz kommt und nachfolgend auch als Funktionsöffnung bezeichnet wird.

Bei bevorzugten Ausführungsformen kommt das Fixierelement zugleich als Verschlusselement zum Freigeben und Verschließen der Funktionsöffnung zum Einsatz, wobei es bevorzugt ist, wenn das Verschlusselement zu diesem Zweck in der Funktionsöffnung axial verstellbar ist. Folglich ist das in der Filtereinrichtung ohnehin vorhandene Verschlusselement ferner zum besagten Halten des Filterelements im Gehäusetopf eingesetzt. Somit ist eine vereinfachte Ausbildung der Filtereinrichtung erreicht.

Das Fixierelement, insbesondere das Verschlusselement, kann prinzipiell beliebig ausgestaltet sein, sofern es bezüglich des Topfbodens, insbesondere in der Funktionsöffnung, vorzugsweise axial, verstellbar ist.

Eine vereinfachte und kostengünstige Realisierung des Fixierelements ist dadurch erreicht, dass das Fixierelement als eine Schraube ausgebildet ist. Bevorzugt ist dabei, wenn die Schraube den Innenraum des Filtertopfes zum Außenraum fluidisch abdichtet.

Bei vorteilhaften Ausführungsformen stehen vom Filterelement zwei oder mehr Gegenhalteelemente radial nach außen ab. Dementsprechend stehen von der Topfwand zwei oder mehr Halteelemente radial nach innen ab. Vorteilhaft sind die Gegenhalteelemente zueinander in Umfangsrichtung beabstandet. Entsprechendes gilt für die zugehörigen Halteelemente. Somit ist ein verbessertes Zentrieren und Halten des Filterelements und zudem ein vereinfachtes Vormontieren im Gehäusetopf sowie Austausch des Filterelements erreicht. Vorteilhaft sind die Gegenhalteelemente in Umfangsrichtung gleichmäßig zueinander beabstandet. Entsprechendes gilt für die Halteelemente. Dies führt zu einem verbesserten Halten und Zentrieren des Filterelements im Gehäusetopf sowie einem vereinfachten Austausch des Filterelements.

Insbesondere kann das Filterelement zwei solche Gegenhalteelemente aufweisen, wobei die Gegenhalteelemente bevorzugt radial gegenüberliegend angeordnet sind. Somit kommt es zu einer gleichmäßigen Auflage der Vorsprünge auf dem jeweils zugehörigen Halterungsgrund und einem gleichmäßigen Halten in Umfangsrichtung, sodass das Filterelement im Gehäusetopf genauer zentriert und gehalten ist. Der Gehäusetopf weist vorteilhaft zwei radial gegenüberliegende Halteelemente auf.

Prinzipiell ist es vorstellbar, dass zumindest eines der Gegenhalteelemente als eine Halterung und zumindest ein anderes der Gegenhalteelemente als ein Vorsprung ausgebildet ist. Dementsprechend ist es vorstellbar, dass zumindest eines der Halteelemente als ein Vorsprung und zumindest ein anderes der Halteelemente als eine Halterung ausgebildet ist. Mit anderen Worten, es ist vorstellbar, dass sowohl das Filterelement als auch der Gehäusetopf jeweils Halterungen und Vorsprünge aufweisen, welche wie beschrieben zusammenwirken.

Weist das Filterelement eine solche Halterung auf, ist die Halterung zweckmäßig hin zur Topföffnung offen. Das heißt, dass die Schenkel der Halterung hin zur Topföffnung vom zugehörigen Halterungsgrund abstehen.

Weist der Gehäusetopf eine solche Halterung auf, ist die Halterung zweckmäßig auf der von der Gehäuseöffnung abgewandten Seite und somit hin zum Topfboden offen. Das heißt, dass die Schenkel auf der von der Topföffnung abgewandten Seite vom Halterungsgrund abstehen.

Bevorzugt sind Ausführungsformen, bei denen entweder die Gegenhalteelemente als eine Halterung oder die Halteelemente als eine Halterung ausgebildet sind. Das heißt, dass Ausführungsformen bevorzugt sind, bei denen das jeweilige Gegenhalteelement als eine Halterung und das jeweilige Halteelement als ein Vorsprung ausgebildet sind oder umgekehrt. Somit werden die Vormontage und das Montieren vereinfacht. Zudem können auf diese Weise sowohl das Filterelement als auch der Gehäusetopf einfacher und kostengünstiger hergestellt werden. Insbesondere bei dem austauschbaren Filterelement ergeben sich somit besonders vorteilhafte Kostenreduzierungen.

Bei bevorzugten Ausführungsformen ist zumindest eines der wenigstens einen Gegengenhalteelemente, besonders bevorzugt das jeweilige Gegenhalteelement, als ein Vorsprung ausgebildet. Dies führt zu einer besonders einfachen und kostengünstigen Herstellung des Filterelements.

Bei bevorzugten Ausführungsbeispielen steht zumindest eines der Gegenhalteelemente, besonders bevorzugt das jeweilige Gegenhalteelement, von einer zugehörigen Endscheibe des Filterelements ab. Das heißt, dass Ausführungsformen bevorzugt sind, bei denen das jeweilige Gegenhalteelement von einer der Endscheiben radial nach außen absteht. Dies führt zu einer weiter vereinfachten und kostengünstigen Herstellung des Filterelements. Zudem kann das Gegenhalteelement auf diese Weise mechanisch stabil ausgebildet werden, sodass die Zentrierung und das Halten des Filterelements im Gehäusetopf mechanisch stabil sind.

Vorteilhaft ist es, wenn das jeweilige Gegenhalteelement an der zugehörigen Endscheibe ausgeformt ist. Das heißt, dass das jeweilige Gegenhalteelement vorteilhaft Bestandteil der zugehörigen Endscheibe ist. Dies führt zu einer weiteren Vereinfachung und Kostenreduzierung der Herstellung des Filterelements sowie zu einer weiter erhöhten mechanischen Stabilität des Gegenhalteelements. Hierbei ist denkbar, dass das Gegenhalteelement aus einem Stück Material mit der Endscheibe gefertigt wird oder alternativ an die Endscheibe angebracht wird. Wird das Halteelement angebracht, können alle gängigen stoff-, form- oder kraftschlüssigen Fügeverfahren zum Einsatz kommen, wie beispielsweise Schweißen, insbesondere das Punkt-Schweißen, Nieten, Kleben, Clinchen und dergleichen.

Bei vorteilhaften Ausführungsformen steht zumindest eines der wenigstens einen Gegenhalteelemente, bevorzugt das jeweilige Gegenhalteelement, von der unteren Endscheibe radial nach außen ab, ist besonders bevorzugt an der unteren Endscheibe ausgeformt. Auf diese Weise erfolgt eine Zentrierung des Filterelements im Gehäusetopf im Bereich der Topföffnung und somit in demjenigen Bereich, in welchem das Filterelement dem Gehäusekopf zugewandt ist. Auf diese Weise wird eine Zentrierung in demjenigen für die Montage wichtigeren Bereich umgesetzt, sodass die Montage der Filtereinrichtung, insbesondere das gemeinsame Anbringen des Filterelements mit dem Gehäusetopf am Gehäusekopf, ebenso wie der Austausch Filterelements präziser und vereinfacht sind.

Eine ebenfalls vorteilhafte Ausführung ist die Ausbildung der Halteelemente und Gegenhalteelemente im Bereich der der Topföffnung des Gehäusetopfes abgewandten Seite des Gehäusetopfes. Das sich im Bereich der Topföffnung gewöhnlich Anschlussgeometrien, welche nicht durch ein Halteelement oder Gegenhalteelement unterbrochen werden sollten befinden, kommt es somit zu einer vereinfachten Ausbildung der Filtereinrichtung. Zu derartigen Anschlussgeometrien gehören beispielhaft Bajonettverschlüsse oder Gewinde.

Der Gehäusekopf kann prinzipiell beliebig ausgebildet sein.

Der Gehäusekopf weist vorteilhaft einen dem Topfboden axial gegenüberliegenden Boden auf, welcher nachfolgend auch als Kopfgrund bezeichnet wird.

Die fluidische Versorgung der Filtereinrichtung, das heißt das Zuführen des zu filternden Fluids und das Abführen des gefilterten Fluids, können prinzipiell beliebig ausgestaltet sein. Auch ist hierbei die Fließrichtung des Fluids durch das Filterelement irrelevant, sodass beispielsweise ein Ringfilterelement wahlweise von innen nach außen oder von außen nach innen durchströmt werden kann.

Bevorzugt erfolgt die fluidische Versorgung über das Gehäuse.

Vorteilhaft erfolgt die fluidische Versorgung über den Gehäusekopf. Somit wird ein Anbringen und Entfernen des Gehäusetops sowie des im Gehäusetopf vormontierten Filterelements erheblich vereinfacht. Mit anderen Worten, es werden somit sowohl die Montage der Filtereinrichtung als auch der Austausch des Filterelements erheblich vereinfacht.

Der Gehäusekopf kann zur fluidischen Versorgung einen Stutzen aufweisen, welcher axial vom Kopfgrund absteht und in seiner Achse auf der Achse des montierten Gehäusetopfes liegt. Der Stutzen ragt im am Gehäusekopf angebrachten Zustand des im Gehäusetopf vormontierten Filterelements in das Elementvolumen. Somit ist das Elementvolumen fluidisch mit dem Stutzen verbunden. Dieser Stutzen dichtet sich radial nach außen mit der Endscheibe des Filterelementes ab. Vorstellbar ist es, über den Stutzen mit dem Filterelement gefiltertes Fluids aus der Filtereinrichtung abzuführen oder alternativ das zu filternden Fluid in den Filter einzuleiten.

Zur fluidischen Versorgung, insbesondere zum Zuführen des zu filternden Fluids zum Filterelement, kann der Stutzen einen vom Stutzen fluidisch getrennten Kanal aufweisen. Der Kanal ist dabei im am Gehäusekopf angebrachten Zustand des im Gehäusetopf vormontierten Filterelements radial außen des Filterelements mit dem Volumen verbunden. Der Kanal kann vorzugsweise als radial umlaufender Bereich den innenliegenden Stutzen, welcher das Filterelement im Filterkopf aufnimmt, umgeben.

Bei bevorzugten Ausführungsformen ist radial zwischen dem Stutzen und einer radialen Innenseite des Filterelements eine Ringdichtung angeordnet, welche an der Innenseite anliegt und das Elementvolumen fluidisch abdichtet. Insbesondere dichtet die Ringdichtung damit Leckageströmungen zwischen dem Elementvolumen und dem Kanal ab. Vorteilhaft weist der Stutzen dabei eine radial nach außen offenen Nut auf, in welcher die Ringdichtung aufgenommen ist. Denkbar ist ebenfalls, dass der Stutzen als Dichtfläche fungiert und die Ringdichtung in eine entsprechend an der Endscheibe ausgebildete Nut angebracht ist. Mit dem erfindungsgemäß im Gehäusetopf vormontierten Filterelement kann das Filterelement zum Austausch auch bei einem Anschwellen der Ringdichtung, welches beispielsweise durch den Kontakt der Ringdichtung mit dem zu filternden Fluids bedingt sein kann, und welches ein Klemmen oder eine Haftung des Filterelements am Stutzen zur Folge hat, einfach und zuverlässig gemeinsam dem Gehäusetopf vom Gehäusekopf getrennt werden.

Als vorteilhaft erweist sich hierbei insbesondere, wenn über die Halte- und Gegenhalteelemente das durch Drehung des Gehäusetopfes bei der Demontage erzeugte Torsionsmoment auf das Filterelement übertragen wird. Dieses Torsionsmoment dient dem Trennen des Filterelementes, insbesondere von der Ringdichtung.

Der jeweilige zumindest eine Vorsprung kann prinzipiell beliebig ausgebildet sein.

Vorstellbar ist es, zumindest einen der wenigstens einen Vorsprünge in der Art eines Stifts oder eines Pins auszubilden.

Bei vorteilhaften Ausführungsformen ist zumindest einer der wenigstens einen Vorsprünge, vorteilhaft der jeweilige Vorsprung, als eine axial flache und sich in Umfangsrichtung erstreckende Schulter ausgebildet. Dies führt zu einer axial kompakten Ausbildung des Vorsprungs und einer vereinfachten Vormontage des Filterelements im Gehäusetopf.

Bei bevorzugten Ausführungsformen ist zumindest einer der wenigstens einen Vorsprünge, vorteilhaft der jeweilige Vorsprung, muschelförmig ausgebildet. Der Vorsprung ist also in der Art einer Muschel geformt. Vorteilhaft ist die Muschel axial, bevorzugt axial hin zur Topföffnung, offen. Der Vorsprung weist also eine axial, bevorzugt hin zum Topfboden gekrümmte Form in der Art einer axial, bevorzugt hin zur Topföffnung, offenen Muschel auf. Eine derartige Muschelform führt aufgrund der gewölbten Form zu einer erhöhten Biegefestigkeit sowohl axialer als auch radial. In der Folge können bei der Montage und/oder beim Austausch, insbesondere bei der Demontage, des Filterelements entstehende Torsionsmomente, welche insbesondere durch Verklebung der Ringdichtung bedingt sein können, sicher und/oder zerstörungsfrei übertragen werden.

Die lösbare Verbindung zwischen dem Gehäusetopf und dem Gehäusekopf kann prinzipiell auf beliebige Weise realisiert sein.

Bei vorteilhaften Ausführungsformen sind der Gehäusetopf und der Gehäusekopf mittels einer Schraubverbindung lösbar miteinander verbunden. Bevorzugt ist es dabei, wenn der Gehäusetopf und der Gehäusekopf zu diesem Zweck jeweils ein Gewinde aufweisen. Insbesondere kann der Gehäusetopf ein Innengewinde und der Gehäusekopf ein Außengewinde aufweisen oder umgekehrt. Somit sind separate Schrauben zum lösbaren Verbinden nicht benötigt und folglich die Filtereinrichtung vereinfacht ausgebildet. Ferner sind auf diese Weise sowohl das Montieren der Filtereinrichtung als auch der Austausch des Filterelements vereinfacht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Draufsicht auf eine Filtereinrichtung,
- Fig. 2: den in Figur 1 mit II-II bezeichneten Schnitt durch die Filtereinrichtung,
- Fig. 3: den in Figur 1 mit III-III bezeichneten Schnitt durch einen Gehäusetopf der Filtereinrichtung,
- Fig. 4: den in Figur 3 mit IV-IV bezeichneten Schnitt durch die Filtereinrichtung,
- Fig. 5: eine isometrische Ansicht eines Filterelements der Filtereinrichtung,
- Fig. 6: eine isometrische Ansicht des Filterelements bei einem anderen Ausführungsbeispiel,
- Fig.7: einen Schnitt durch die Filtereinrichtung im Bereich eines Stutzens,
- Fig. 8: eine Detailansicht des Filterelements bei einem weiteren Ausführungsbeispiel in Draufsicht,
- Fig. 9: den in Figur 8 mit A-A bezeichneten Schnitt.

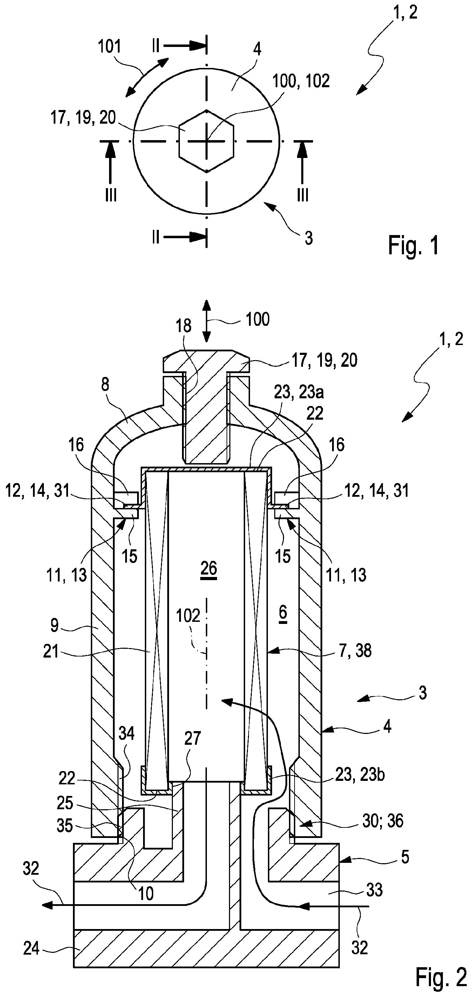

Eine Filtereinrichtung 1, wie sie beispielhaft in den Figuren 1 bis 9 gezeigt ist, kommt zum Filtern eines Fluids zum Einsatz. Die Filtereinrichtung 1 kommt insbesondere zum Filtern einer Flüssigkeit, beispielsweise einer Hydraulikflüssigkeit, zum Einsatz. Die Filtereinrichtung 1 ist also insbesondere als eine Hydraulikfiltereinrichtung 2 ausgebildet.

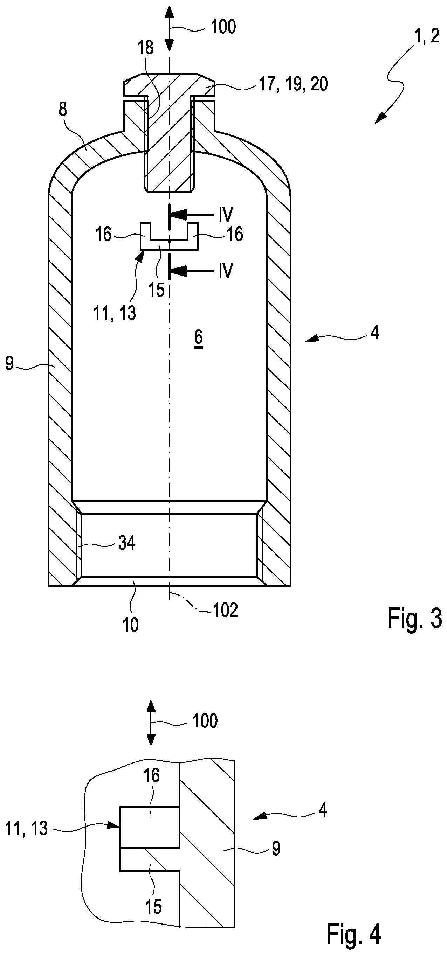

Die Filtereinrichtung 1 weist ein Gehäuse 3 auf. Wie Figur 1 entnommen werden kann, weist das Gehäuse 3 zwei Teile 4, 5, nämlich einen Gehäusetopf 4 sowie einen mit dem Gehäusetopf 4 lösbar verbundenen Gehäusekopf 5 auf. Der Gehäusetopf 4 und der Gehäusekopf 5 begrenzen ein Volumen 6, in welchem ein Filterelement 7 zum Filtern des Fluids austauschbar aufgenommenen ist. Das Filterelement 7 ist zum Filtern des Fluids von außen nach innen oder umgekehrt durchströmbar und in den gezeigten Ausführungsbeispielen ein Ringfilterelement 38. Der Gehäusetopf 4 weist einen zum Gehäusekopf 5 in einer Richtung 100 beabstandeten Topfboden 8 auf, wobei die Richtung 100 nachfolgend als Axialrichtung 100 bezeichnet wird. Der Gehäusetopf 4 weist ferner eine axial vom Topfboden 8 abstehende und in einer Umfangsrichtung 101 umlaufende Topfwand 9 auf. Die Topfwand 9 begrenzt eine axial dem Topfboden 8 gegenüberliegende Öffnung 10 des Gehäusetopfs 4 in Umfangsrichtung 101. Die Öffnung 10 wird nachfolgend auch als Topföffnung 10 bezeichnet. Wie nachfolgend erläutert wird, ist das Filterelement 7 im Gehäusetopf 4 vormontiert und gemeinsam mit dem Gehäusetopf 4 mit dem Gehäusekopf 5 verbunden. Zu diesem Zweck weisen der Gehäusetopf 4 und das Filterelement 7 zugehörige, miteinander zusammenwirkende Halteelemente 11, 12 auf, wobei das jeweilige Halteelement 12 des Filterelements 7 zur besseren Unterscheidung nachfolgend auch als Gegenhalteelement 12 bezeichnet wird. Dabei weist der Gehäusetopf 4 zumindest ein von der Topfwand 9 radial nach innen abstehendes Halteelement 11 und das Filterelement 7 für das jeweilige Halteelement 11 ein zugehöriges, radial nach außen abstehendes Gegenhalteelement 12 auf. Dabei ist eines der Halteelemente 11, 12 als eine Halterung 13 und das zugehörige Halteelement 11, 12 als ein Vorsprung 14 ausgebildet. Mit anderen Worten, das jeweilige Halteelement 11 ist als eine Halterung 13 und das zugehörige Gegenhalteelement 12 als ein Vorsprung 14 ausgebildet, oder umgekehrt. Wie insbesondere Figur 3 entnommen werden kann, weist die jeweilige zumindest eine Halterung 13 einen in Umfangsrichtung 101 verlaufenden Halterungsgrund 15 sowie zwei vom Halterungsgrund 15 abstehende Schenkel 16 auf, wobei die Schenkeln 16 in Umfangsrichtung 101 gegenüberliegend angeordnet sind. Der jeweilige Vorsprung 14 steht in einem in dem Gehäusetopf 4 vormontierten Zustand mit der zugehörigen Halterung 13 in Eingriff. Die jeweilige Halterung 13 ist also axial einseitig offen und nimmt in dem im Gehäusetopf 4 vormontierten Zustand des Filterelements 7 den zugehörigen Vorsprung 14 auf. Der Eingriff ist derart, dass der Vorsprung 14 auf dem zugehörigen Halterungsgrund 15 axial aufliegt (siehe auch Figur 4) und mittels den zugehörigen Schenkeln 16 in Umfangsrichtung 101 fixiert ist. Die Schenkel 16 bilden somit für den zugehörigen Vorsprung 14 jeweils einen Anschlag in Umfangsrichtung 101. Folglich ist das Filterelement 7 im Gehäusetopf 4 zentriert und axial hin zur Topföffnung 10 gehalten. Dies erlaubt es, das Filterelement 7 auf einfache und zuverlässige Weise im Gehäusetopf 4 vorzumontieren und zu positionieren, sodass eine anschließende Verbindung des Gehäusetopfs 4 gemeinsam mit dem darin vormontierten Filterelement 7 mit dem Gehäusekopf 5 erheblich vereinfacht ist. Durch das Vormontieren des Filterelements 7 im Gehäusetopf 4 ist ferner eine axial benötigte Höhe zum Verbinden des Gehäusetopfs 4 mit dem Gehäusekopf 5 sowie zum Entfernen des Gehäusetopfs 4 vom Gehäusekopf 5, insbesondere im Vergleich zu aus dem Stand der Technik bekannten Varianten, bei denen das Filterelement 7 am Gehäusekopf 5 vormontiert ist, erheblich reduziert. Mit der erfindungsgemäßen Lösung wird auch eine Demontage der Filtereinrichtung 1, bei welcher der Gehäusetopf 4 gemeinsam mit dem Filterelement 7 vom Gehäusekopf 5 getrennt wird, erheblich vereinfacht. Dabei verbleibt das Filterelement 7 - auch bei einem möglichen und unerwünschten Klemmen am Gehäusekopf 5 und/oder unerwünschten Haftungen am Gehäusekopf 5 - aufgrund des Haltens des Filterelements 7 im Gehäusetopf 4 in Umfangsrichtung 101 und axial, zuverlässig im Gehäusetopf 4. Dementsprechend ist ein Austausch des Filterelements 7 deutlich vereinfacht und mit geringerem Bauraum, insbesondere geringerer axialer Höhe, möglich.

Die vorliegend angegebenen Richtungen beziehen sich jeweils auf die Axialrichtung 100, welche, wie insbesondere in Figur 3 angedeutet, bevorzugt koaxial der Längsmittelachse 102 des Gehäuses 3 bzw. des Filterelements 7 verläuft. Dementsprechend bedeutet "axial" parallel oder koaxial zur Axialrichtung 100. Ferner läuft die Umfangsrichtung 101 die Axialrichtung 100 umgebend. Zudem bedeutet "radial" quer zur Axialrichtung 100 und somit quer zu axial.

Figur 1 zeigt eine Draufsicht auf die Filtereinrichtung 1, in der der Gehäusetopf 4 bzw. der Topfboden 8 gezeigt ist. Figur 2 zeigt den in Figur 1 mit II-II angedeuteten Schnitt, wobei der Gehäusetopf 4 und der Gehäusekopf 5 in einem Zustand während des Verbindens miteinander oder des Trennens voneinander gezeigt sind. Figur 3 zeigt den in Figur 1 mit III-III angedeuteten Schnitt, wobei der Gehäusekopf 15 sowie das Filterelement 7 zum besseren Verständnis nicht dargestellt sind. Figur 4 zeigt den in Figur 3 mit IV-IV angedeuteten Schnitt.

In den gezeigten Ausführungsbeispielen ist, wie den Figuren 2 und 3 entnommen werden kann, der Topfboden 8 von der Topföffnung 10 abgewandt nach außen gekrümmt, sodass der Gehäusetopf 4 in der Art einer Glocke geformt ist.

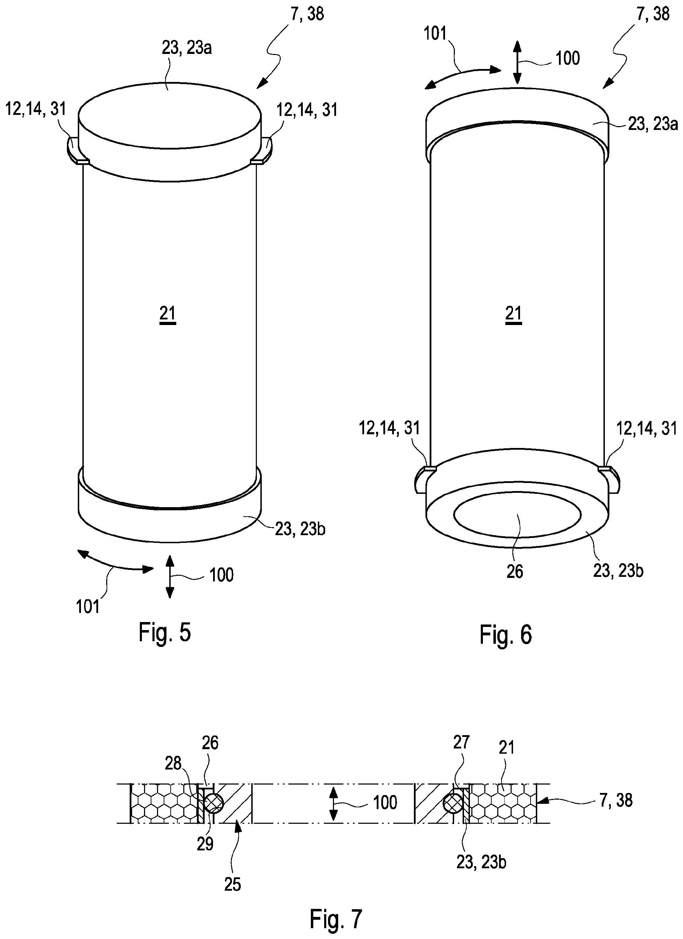

In den gezeigten Ausführungsbeispielen weist der Gehäusetopf 4 die zumindest eine Halterung 13 und das Filterelement 7 den zugehörigen, zumindest einen Vorsprung 14 auf. Das heißt, dass das jeweilige Halteelement 11 als eine Halterung 13 und das jeweilige Gegenhalteelement 12 als ein Vorsprung 14 ausgebildet ist. Die jeweilige Halterung 13 weist somit Schenkel 16 auf, welche auf der von der Topföffnung 10 abgewandten Seite vom zugehörigen Halterungsgrund 15 abstehen. In den gezeigten Ausführungsbeispielen stehen die Schenkel 16 der jeweiligen Halterung 13 dabei axial ab, sodass die jeweilige Halterung U-förmig ausgebildet ist. In den gezeigten Ausführungsbeispielen sind ferner die Schenkel 16 gleichgroß, sodass sie gleich weit vom Halterungsgrund 15 abstehen. Zudem weist in den gezeigten Ausführungsbeispielen der Gehäusetopf 4 zwei solche, zueinander in Umfangsrichtung 101 beabstandete, Halterungen 13 und das Filterelement 7 zwei solche, in Umfangsrichtung 101 zueinander beabstandete Vorsprünge 14 auf. In den gezeigten Ausführungsbeispielen sind die Halterungen 13 und die Vorsprünge 14 radial gegenüberliegend angeordnet. Wie insbesondere den Figuren 5 und 6 entnommen werden kann, können die Vorsprünge 14 jeweils als eine axial flache und sich in Umfangsrichtung 101 länglich erstreckende Schulter 31 ausgebildet sein.

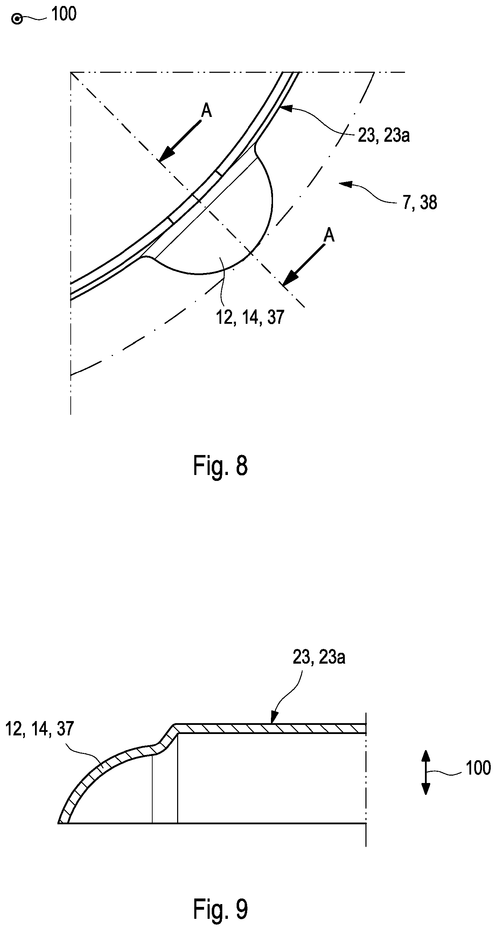

Wie den Figuren 8 und 9 entnommen werden kann, können die Vorsprünge 14 muschelartig ausgebildet und axial hin zur Topföffnung 10 offen sein. Die Vorsprünge 14 weisen also die Form einer hin zur Topföffnung 10 offenen Muschel 37 auf. In den gezeigten Ausführungsbeispielen sind ferner die Vorsprünge 14 gleich ausgebildet. Zudem sind die Halterungen 13 gleich ausgebildet. Somit wird der Austausch des Filterelements 7 vereinfacht.

Zum Erreichen des im Gehäusetopf 4 vormontierten Zustands des Filterelements 7 wird somit das Filterelement 7 durch die Topföffnung 10 axial in den Gehäusetopf 4 eingeschoben und in Umfangsrichtung 101 gedreht, bis der jeweilige Vorsprung 14 auf der von der Topföffnung 10 axial abgewandten Seite eines zugehörigen Halterungsgrunds 15 angeordnet ist. Anschließend wird das Filterelement 7 axial hin zur Topföffnung 10 bewegt, sodass der jeweilige Vorsprung 14 und die zugehörige Halterung 13 in Eingriff stehen. Wie Figur 2 entnommen werden kann, ist das Filterelement 7 in den im Gehäusetopf 4 vormontierten Zustand zumindest überwiegend, in den gezeigten Ausführungsbeispielen gänzlich, innerhalb des Gehäusetops 4 angeordnet. Dabei überragt der Gehäusetopf 4 das Filterelement 7 axial. Wie Figur 2 ferner entnommen werden kann, ist in den gezeigten Ausführungsbeispielen der Gehäusetopf 4 axial größer als der Gehäusekopf 5.

Zum Halten des Filterelements 7 im Gehäusetopf 4 axial von der Topföffnung 10 abgewandt weist die Filtereinrichtung 1 in den gezeigten Ausführungsbeispielen, wie insbesondere den Figuren 2 und 3 entnommen werden kann, ein Element 17 auf, welches hin zum Filterelement 7 verstellbar ist und nachfolgend auch als Fixierelement 17 bezeichnet wird. **In** den gezeigten Ausführungsbeispielen ist das Fixierelement axial verstellbar ist. Das Fixierelement 17 ist somit axial hin zur Topföffnung 10 verstellbar. Dabei ist das Filterelement 7, wie in Figur 2 angedeutet, mittels des Fixierelements 17 axial von der Topföffnung 10 abgewandt im Gehäusetopf 4 gehalten. Somit ist das Filterelement 7 im vormontierten Zustand axial beidseitig im Gehäusetopf 4 gehalten. Dabei dient das Fixierelement 17 als axialer Anschlag für das Filterelement 7, wobei bevorzugt ein geringes axiales Spiel zwischen dem Fixierelement 17 und dem Filterelement 7 möglich ist. Das Spiel ist zweckmäßig derart bemessen, dass die Vorsprünge 14 nicht über die Schenkel 16 der Halterung 13 und damit aus der Halterung 13 heraus bewegt werden können. Zum Vormonieren des Filterelements 7 im Gehäusetopf 4 wird das Fixierelement 17 nach dem Bewegen des Filterelements 7 axial hin zur Topföffnung 10 axial hin zum Filterelement 7 verstellt, um das Filterelement 7 axial von der Topföffnung 10 abgewandt im Gehäusetopf 4 zu halten. Das heißt, dass das Fixierelement 17 erst dann axial hin zum Filterelement 7 verstellt wird, wenn die Vorsprünge 14 mit den Halterungen 13 in Eingriff stehen oder wenn die Vorsprünge 14 jeweils auf der axial von der Topföffnung 10 abgewandten Seite des zugehörigen Halterungsgrunds 15 angeordnet sind, um das Filterelement 7 axial im Gehäusetopf 4 zu halten.

Wie insbesondere den Figuren 2 und 3 entnommen werden kann, ist das Fixierelement 17 in den gezeigten Ausführungsbeispielen in einer Öffnung 18 im Topfboden 8 axial verstellbar. Die Öffnung 18 wird auch zum Belüften und/oder Entlüften des Volumens 6 eingesetzt und wird nachfolgend auch als Funktionsöffnung 18 bezeichnet. Das heißt, dass das Fixierelement 17 gänzlich aus der Funktionsöffnung 18 entfernt werden kann, um das Volumen 6 zu belüften und/oder zu entlüften und/oder zu befüllen. Häufig reicht es für das Be- und Entlüften bereits aus, die Schraube lediglich zu lösen. Zwischen dem Kopf der Schraube und der Dichtfläche am Filtertopf, welche radial die Öffnung 18 umläuft, befindet sich i.d.R. eine Dichtung. Bei leichtem Lösen der Schraube verliert die Dichtung ihre Dichtwirkung und Luft kann ein- oder austreten. Somit dient das Fixierelement 17 zugleich dem Verschließen und Freigeben der Funktionsöffnung 18, ist also als ein Verschlusselement 19. Dabei ist das Fixierelement 17 in den gezeigten Ausführungsbeispielen als eine Schraube 20 ausgebildet.

Das Filterelement 7 weist zum Filtern des Fluids ein hohlzylindrisches Filtermedium 21 auf. Somit weist das Filterelement 7 ein radial inneres Volumen 26 auf, welches radial außen vom Filtermedium 21 begrenzt ist. Das Volumen 26 wird nachfolgend auch als Elementvolumen 26 bezeichnet. Zudem weist das Filterelement 7 in den gezeigten Ausführungsbeispielen an zumindest einer axialen Stirnseite 22 eine Endscheibe 23 auf. In den gezeigten Ausführungsbeispielen weist das Filterelement 7 an der jeweiligen Stirnseite 22 eine solche Endscheibe 23 auf. Somit weist das Filterelement 7 an der im vormontierten Zustand axial dem Topfboden 8 zugewandten Seite eine Endscheibe 23, 23a auf, welche nachfolgend auch als obere Endscheibe 23, 23a bezeichnet wird. Zudem weist das Filterelement 7 an der im vormontierten Zustand axial vom Topfboden 8 abgewandten Seite eine Endscheibe 23, 23b auf, welche nachfolgend auch als untere Endscheibe 23, 23b bezeichnet wird. **In** den gezeigten Ausführungsbeispielen ist die jeweilige Endscheibe 23, wie den Figuren 5 und 6 entnommen werden kann, insbesondere den Figuren 5 und 6 entnommen werden kann, ringförmig ausgebildet.

Wie in Figur 2 angedeutet, erfolgt das Halten des Filterelements 7 im Gehäusetopf 4 im vormontierten Zustand mittels des Fixierelements 17 durch das Zusammenwirken des Fixierelements 7 mit der oberen Endscheibe 23, 23a. Wie insbesondere den Figuren 5 und 6 ferner entnommen werden kann, stehen in den gezeigten Ausführungsbeispielen die Gegenhaltelemente 12 und somit die Vorsprünge 14 jeweils von einer der Endscheiben 23 radial nach außen ab.

**In** dem in den Figuren 1 bis 5 gezeigten Ausführungsbeispiel stehen die Gegenhalteelemente 12 radial außen von der oberen Endscheibe 23, 23a ab.

**In** dem in Figur 6 gezeigten Ausführungsbeispiel stehen die Gegenhalteelemente 12 und somit die Vorsprünge 14 jeweils von der unteren Endscheibe 23, 23b ab. Dabei sind die Halteelemente 11 und somit Halterungen 13 im Gehäusetopf 4 im Vergleich zu dem in den Figuren 1 bis 5 gezeigten Ausführungsbeispiel, entsprechend axial hin zur Topföffnung 10 versetzt (nicht gezeigt). **In** dem in Figur 6 gezeigten Ausführungsbeispiel erfolgt ein vereinfachtes Vormontieren des Filterelements 7 im Gehäusetopf 4 sowie eine präzisere Zentrierung des Filterelements 7, sodass das anschließende gemeinsame Verbinden mit dem Gehäusekopf 5 weiter vereinfacht ist. Dementsprechend ist der Austausch des Filterelements 7 vereinfacht.

Der Gehäusekopf 5 weist in den gezeigten Ausführungsbeispielen, wie Figur 2 entnommen werden kann, einen dem Topfboden 8 gegenüberliegenden Grund 24 auf, der sich radial erstreckt und nachfolgend auch als Kopfgrund 24 bezeichnet wird. Die fluidische Versorgung der Filtereinrichtung 1, das heißt das Zuführen des zu filternden Fluids und das Abführen des gefilterten Fluids, erfolgen in den gezeigten Ausführungsbeispielen, wie Figur 2 entnommen werden kann, über den Gehäusekopf 5. Zu diesem Zweck weist der Gehäusekopf 5 in den gezeigten Ausführungsbeispielen einen axial vom Kopfgrund 24 abstehenden Stutzen 25 auf, welcher axial durch die untere Endscheibe 23, 23b in das Elementvolumen 26 des Filterelements 7 greift, sodass das Elementvolumen 26 fluidisch mit dem Stutzen 25 verbunden ist. In den gezeigten Ausführungsbeispielen dient der Stutzen 25 dem Zweck, mit dem Filterelement 7 gefiltertes Fluid aus der Filtereinrichtung 1 zu führen. Ein in Figur 2 mit Pfeilen angedeuteter Strömungspfad 32 des Fluids führt somit von radial außen durch das Filtermedium 7 in das Elementvolumen 26 und über den Stutzen 25 aus der Filtereinrichtung 1. Das Zuführen des Fluids erfolgt über einen im Gehäusekopf 5 ausgebildeten Kanal 33, sodass der Strömungspfad 32 über den Kanal 33 auf die radial vom Elementvolumen 26 abgewandten Seite des Filterelements 7 führt. Wie Figur 2 ferner entnommen werden kann, erfolgen in den gezeigten Ausführungsbeispielen sowohl das Zuführen des zu filternden Fluids als auch das Abführen des gefilterten Fluids radial in den bzw. radial aus dem Gehäusekopf 5. Ferner ist die Strömungsrichtung umkehrbar, sodass das Filterelement 7 von innen nach außen durchströmt wird. Zudem kann das Zuführen und das Abführen des Fluids in beliebigen Richtungen abseits der in der Abbildung gezeigten Richtung erfolgen, auch muss die Zu- und Ableitung nicht zwangsläufig gegenüberliegen.

Die obere und untere Endscheibe 23 unterscheiden sich in den gezeigten Ausführungsbeispielen, wie in den Figuren angedeutet, darin, dass die untere Endscheibe 23, 23b eine offene Endscheibe 23, 23b ist, welche also eine zentrale Öffnung besitzt, in welcher im am Gehäusekopf 5 montierten Zustand der Stutzen 25 eingreift. Die obere Endscheibe 23, 23a ist dagegen eine geschlossene Endscheibe 23, 23a, das Elementvolumen 26 axial hin zum Topfboden 8 abzudichten.

Die Figur 7 zeigt eine vergrößerte Ansicht des Bereichs zwischen dem Stutzen 25 und dem Filterelement 7. Wie Figur 7 entnommen werden kann, ist zwischen dem Stutzen 25 und einer radialen Innenseite 27 des Filterelements 7 eine lediglich in Figur 7 gezeigte Ringdichtung 28 angeordnet. Die Ringdichtung 28 ist in den gezeigten Ausführungsbeispielen und bevorzugt radial zwischen dem Stutzen 25 und der unteren Endscheibe 23, 23b angeordnet und liegt an der Innenseite 27 an. Somit dichtet die Ringdichtung 28 das Elementvolumen 26 insbesondere gegen Leckageströmungen des Fluids zwischen dem Kanal 33 und dem Elementvolumen 26 ab. Der Stutzen 25 weist, wie Figur 7 entnommen werden kann, eine radial nach außen offene Nut 29 auf, in der die Ringdichtung 28 aufgenommen ist. Ebenfalls ist denkbar, dass die untere Endscheibe 23, 23b des Filterelements 7 eine nicht gezeigte radial innen verlaufende Aufnahme, beispielsweise bspw. Nut, aufweist, welche die Ringdichtung 28 fixiert. In diesem Fall kann die Nut 29 am Stutzen 25 entfallen.

Wie insbesondere Figur 2 entnommen werden kann, ist die lösbare Verbindung zwischen den Gehäusetopf 4 und dem Gehäusekopf 5 in den gezeigten Ausführungsbeispielen mittels einer Schraubverbindung 30 realisiert. Dabei weist in den gezeigten Ausführungsbeispielen der Gehäusetopf 4 ein in der Topfwand 9 ausgebildetes Innengewinde 34 auf, welches mit einem zum Stutzen 25 radial beabstandeten Außengewinde 35 des Gehäusekopfes 5 zusammenwirkt. Ein Vorteil der vorliegenden Erfindung ist dabei darin zu sehen, dass der für die Montage und Demontage benötigte Bauraum lediglich die Höhe der Gewinde 34,3 5 zwischen Gehäusetopf 4 und Gehäusekopf 5 umfasst. Alternativ sind Gehäusetopf 4 und Gehäusekopf 5 in den gezeigten Ausführungsbeispielen mittels einer Bajonettverbindung 36 lösbar miteinander verbunden, wobei sich ein entsprechender Vorteil hinsichtlich des benötigten Bauraums ergibt.

## Patentansprüche

1. Filtereinrichtung (1), insbesondere Hydraulikfiltereinrichtung (2),
- mit einem Gehäuse (3), das einen Gehäusetopf (4) und einen mit dem Gehäusetopf (4) lösbar verbundenen Gehäusekopf (5) aufweist, welche ein Volumen (6) begrenzen,
- mit einem im Volumen (6) austauschbar aufgenommenen Filterelement (7),
- wobei der Gehäusetopf (4) einen zum Gehäusekopf (5) in einer Axialrichtung (100) beabstandeten Topfboden (8) sowie eine axial vom Topfboden (8) abstehende und in einer Umfangsrichtung (101) umlaufende Topfwand (9) aufweist, welche eine axial dem Topfboden (8) gegenüberliegende Topföffnung (10) des Gehäusetopfs (4) in Umfangsrichtung (101) begrenzt,
- wobei das Filterelement (7) im Gehäusetopf (4) vormontiert und gemeinsam mit dem Gehäusetopf (4) mit dem Gehäusekopf (5) im montierten Zustand verbunden ist,
- wobei der Gehäusetopf (4) zumindest ein von der Topfwand (9) radial nach innen abstehendes Halteelement (11) und das Filterelement (7) für das jeweilige Halteelement (11) ein zugehöriges, radial nach außen abstehendes Gegenhalteelement (12) aufweist,
- wobei das jeweilige Halteelement (11) als eine Halterung (13) und das zugehörige Gegenhalteelement (12) als ein Vorsprung (14) ausgebildet sind, oder umgekehrt,
- wobei die jeweilige zumindest eine Halterung (13) einen in Umfangsrichtung (101) verlaufenden Halterungsgrund (15) sowie zwei vom Halterungsgrund (15) abstehende Schenkeln (16) aufweist, wobei die Schenkel (16) in Umfangsrichtung (101) gegenüberliegend angeordnet sind,
- wobei der jeweilige Vorsprung (14) in einem im Gehäusetopf (4) vormontierten Zustand mit der zugehörigen Halterung (13) in Eingriff steht, derart dass der Vorsprung (14) auf dem zugehörigen Halterungsgrund (15) axial aufliegt und mittels den zugehörigen Schenkeln (16) in Umfangsrichtung (101) fixiert ist, sodass das Filterelement (7) im Gehäusetopf (4) zentriert und axial hin zur Topföffnung (10) gehalten ist
**dadurch gekennzeichnet,**
- **dass** am Gehäusetopf (4) ein Fixierelement (17) angeordnet ist, welches hin zum Filterelement (7) verstellbar ist,
- **dass** das Filterelement (7) im hin zum Filterelement (7) verstellten Zustand des Fixierelements (17) mittels des Fixierelements (17) axial von der Topföffnung (10) abgewandt im Gehäusetopf (4) gehalten ist.

2. Filtereinrichtung nach Anspruch 1,
**dadurch gekennzeichnet,**
**dass** das Filterelement (7) und der Gehäusetopf (4) derart ausgebildet sind, dass das Filterelement (7) zum Erreichen des vormontierten Zustands durch die Topföffnung (10) axial in den Gehäusetopf (4) eingeschoben, in Umfangsrichtung (101) gedreht und axial hin zur Topföffnung (10) bewegt wird.

3. Filtereinrichtung nach Anspruch 1 und 2,
**dadurch gekennzeichnet,**
**dass** die Filtereinrichtung (1) derart ausgestaltet ist, dass das Fixierelement (17) nach dem Bewegen des Filterelements (7) axial hin zur Topföffnung (10) hin zum Filterelement (7) verstellt ist, um das Filterelement (10) axial von der Topföffnung (10) abgewandt im Gehäusetopf (4) zu halten.

4. Filtereinrichtung nach einem der Ansprüche 1 bis 3,
**dadurch gekennzeichnet,**
**dass** Fixierelement (17) am Gehäusetopf (4) axial verstellbar ist.

5. Filtereinrichtung nach einem der Ansprüche 1 bis 4,
**dadurch gekennzeichnet,**
- **dass** der Topfboden (8) eine Funktionsöffnung (18) aufweist,
- **dass** das Fixierelement (17) als ein in der Funktionsöffnung (18) verstellbares Verschlusselement (19), insbesondere als eine Schraube (20), ausgebildet ist.

6. Filtereinrichtung nach einem der Ansprüche 1 bis 5,
**dadurch gekennzeichnet,**
**dass** zumindest eines der wenigstens einen Gegenhalteelemente (12), insbesondere das jeweilige Gegenhalteelement (12), als ein Vorsprung (14) ausgebildet ist.

7. Filtereinrichtung nach einem der Ansprüche 1 bis 6,
**dadurch gekennzeichnet,**
- **dass** das Filterelement (7) ein Filtermedium (21) zum Filtern eines Fluids, insbesondere einer Flüssigkeit, sowie an zumindest einer axialen Stirnseite (22) eine Endscheibe (23) aufweist,
- **dass** zumindest eines der wenigstens einen Gegenhalteelemente (12) radial von einer der wenigstens einen Endscheiben (23) absteht.

8. Filtereinrichtung nach Anspruch 7,
**dadurch gekennzeichnet,**
- **dass** das Filterelement (7) eine dem Topfboden (8) zugewandte obere Endscheibe (23, 23a) und eine vom Topfboden (8) abgewandte untere Endscheibe (23, 23b) aufweist,
- **dass** zumindest eines der wenigstens einen Gegenhalteelemente (12) radial von der unteren Endscheibe (23, 23b) absteht.

9. Filtereinrichtung nach einem der Ansprüche 1 bis 8,
**dadurch gekennzeichnet,**
**dass** der Gehäusekopf (5) einen dem Topfboden (8) axial gegenüberliegenden Kopfgrund (24) sowie einen axial vom Kopfgrund (24) abstehenden Stutzen (25) aufweisen, welcher axial in ein Elementvolumen (26) des Filterelements (7) greift, sodass das Elementvolumen (26) fluidisch mit dem Stutzen (25) verbunden ist.

10. Filtereinrichtung nach Anspruch 9,
**dadurch gekennzeichnet,**
**dass** radial zwischen dem Stutzen (25) und einer radialen Innenseite (27) des Filterelements (7) eine Ringdichtung (28) angeordnet ist, welche das Elementvolumen (26) fluidisch abdichtet.

11. Filtereinrichtung nach einem der Ansprüche 1 bis 10,
**dadurch gekennzeichnet,**
**dass** die Filtereinrichtung (1) zumindest zwei Halteelemente (11) und zugehörige Gegenhaltelemente (12) aufweist, welche in Umfangsrichtung (101) zueinander beabstandet sind.

12. Filtereinrichtung nach einem der Ansprüche 1 bis 11,
**dadurch gekennzeichnet,**
**dass** zumindest eine der wenigstens einen Halterungen (13) Schenkel (16) aufweist, welche unterschiedlich weit vom Halterungsgrund (15) abstehen.

13. Filtereinrichtung nach einem der Ansprüche 1 bis 12,
**dadurch gekennzeichnet,**
**dass** zumindest einer der wenigstens einen Vorsprünge (14) in der Art einer axial offenen Muschel (37) ausgebildet ist.

14. Filtereinrichtung nach einem der Ansprüche 1 bis 13,
**dadurch gekennzeichnet,**
**dass** der Gehäusetopf (4) und der Gehäusekopf (5) mittels einer Schraubverbindung (30) oder einer Bajonettverbindung (36) lösbar miteinander verbunden sind.

## Claims

1. Filter apparatus (1), in particular a hydraulic Filter apparatus (2),
- having a housing (3) which has a housing pot (4) and a housing head (5) releasably connected to the housing pot (4), which bound a volume (6),
- having a filter element (7) exchangeably accommodated in the volume (6),
- wherein the housing pot (4) has a pot bottom (8) spaced in an axial direction (100) from the housing head (5) and a pot wall (9) projecting axially from the pot bottom (8) and extending circumferentially in a circumferential direction (101), which pot wall bounds a pot opening (10) of the housing pot (4) axially opposite the pot bottom (8) in the circumferential direction (101),
- wherein the filter element (7) is preassembled in the housing pot (4) and, together with the housing pot (4), is connected to the housing head (5) in the assembled state,
- wherein the housing pot (4) has at least one holding element (11) projecting radially inward from the pot wall (9), and the filter element (7) has, for the respective holding element (11), an associated counter-holding element (12) projecting radially outward,
- wherein the respective holding element (11) is designed as a holder (13) and the associated counter-holding element (12) is designed as a projection (14), or vice versa,
- wherein the respective at least one holder (13) has a holder base (15) extending in the circumferential direction (101) and two legs (16) projecting from the holder base (15), wherein the legs (16) are arranged opposite each other in the circumferential direction (101),
- wherein the respective projection (14) engages with the associated holder (13) in a preassembled state in the housing pot (4), such that the projection (14) lies axially on the associated holder base (15) and is fixed in the circumferential direction (101) by means of the associated legs (16), so that the filter element (7) is centered in the housing pot (4) and held axially toward the pot opening (10),
**characterized in that**
- a fixing element (17) is arranged on the housing pot (4) and is adjustable toward the filter element (7),
- the filter element (7) is held axially facing away from the pot opening (10) in the housing pot (4) by means of the fixing element (17) in the state in which the fixing element (17) is adjusted toward the filter element (7).

2. Filter apparatus according to claim 1,
**characterized in that**
the filter element (7) and the housing pot (4) are designed such that
the filter element (7), to reach the preassembled state, is axially inserted into the housing pot (4) through the pot opening (10), rotated in the circumferential direction (101), and moved axially toward the pot opening (10).

3. Filter apparatus according to claims 1 and 2,
**characterized in that**
the filter apparatus (1) is designed such that the fixing element (17), after the movement of the filter element (7) axially toward the pot opening (10), is adjusted toward the filter element (7) to hold the filter element (10) axially facing away from the pot opening (10) in the housing pot (4).

4. Filter apparatus according to any one of claims 1 to 3,
**characterized in that**
the fixing element (17) is axially adjustable on the housing pot (4).

5. Filter apparatus according to any one of claims 1 to 4,
**characterized in that**
- the pot bottom (8) has a functional opening (18),
- the fixing element (17) is designed as a closure element (19) adjustable in the functional opening (18), in particular as a screw (20).

6. Filter apparatus according to any one of claims 1 to 5,
**characterized in that**
at least one of the at least one counter-holding elements (12), in particular the respective counter-holding element (12), is designed as a projection (14).

7. Filter apparatus according to any one of claims 1 to 6,
**characterized in that**
- the filter element (7) has a filter medium (21) for filtering a fluid, in particular a liquid, and an end disc (23) at at least one axial end face (22),
- at least one of the at least one counter-holding elements (12) projects radially from one of the at least one end discs (23).

8. Filter apparatus according to claim 7,
**characterized in that**
- the filter element (7) has an upper end disc (23, 23a) facing the pot bottom (8) and a lower end disc (23, 23b) facing away from the pot bottom (8),
- at least one of the at least one counter-holding elements (12) projects radially from the lower end disc (23, 23b).

9. Filter apparatus according to any one of claims 1 to 8,
**characterized in that**
the housing head (5) has a head base (24) axially opposite the pot bottom (8) and a nozzle (25) which projects axially from the head base (24), and which engages axially into an element volume (26) of the filter element (7), so that the element volume (26) is in fluid communication with the nozzle (25).

10. Filter apparatus according to claim 9,
**characterized in that**
a ring seal (28) is arranged radially between the nozzle (25) and a radial inner side (27) of the filter element (7), and fluidically seals the element volume (26).

11. Filter apparatus according to any one of claims 1 to 10,
**characterized in that**
the Filter apparatus (1) has at least two holding elements (11) and associated counter-holding elements (12) which are spaced apart from one another in the circumferential direction (101).

12. Filter apparatus according to any one of claims 1 to 11,
**characterized in that**
at least one of the at least one holders (13) has legs (16) which project different distances from the holder base (15).

13. Filter apparatus according to any one of claims 1 to 12,
**characterized in that**
at least one of the at least one projections (14) is designed in the manner of an axially open shell (37).

14. Filter apparatus according to any one of claims 1 to 13,
**characterized in that**
the housing pot (4) and the housing head (5) are releasably connected to each other by means of a screw connection (30) or a bayonet connection (36).

## Revendications

1. Dispositif de filtration (1), en particulier dispositif de filtration hydraulique (2),
- avec un boîtier (3) qui présente un pot de boîtier (4) et une tête de boîtier (5) reliée de manière amovible au pot de boîtier (4) qui délimitent un volume (6),
- avec un élément de filtration (7) reçu de manière interchangeable dans le volume (6),
- dans lequel le pot de boîtier (4) présente un fond de pot (8) espacé de la tête de boîtier (5) dans le sens axial (100) ainsi qu'une paroi de pot (9) dépassant axialement du fond de pot (8) et tournant dans un sens périphérique (101), paroi qui délimite une ouverture de pot (10) opposée axialement au fond de pot (8) du pot de boîtier (4) dans le sens périphérique (101),
- dans lequel l'élément de filtration (7) est prémonté dans le pot de boîtier (4) et est relié conjointement avec le pot de boîtier (4) à la tête de boîtier (5) dans l'état monté,
- dans lequel le pot de boîtier (4) présente au moins un élément de retenue (11) dépassant radialement vers l'intérieur de la paroi de fond (9) et l'élément de filtration (7) présente pour l'élément de retenue (11) respectif un élément de retenue antagoniste (12) afférent dépassant radialement vers l'extérieur,
- dans lequel l'élément de retenue (11) respectif est réalisé comme un support (13) et l'élément de retenue antagoniste (12) afférent est formé comme une saillie (14) ou inversement,
- dans lequel l'au moins un support (13) respectif présente un fond de support (15) s'étendant dans le sens périphérique (101) ainsi que deux branches (16) dépassant du fond de support (15), dans lequel les branches (16) sont agencées à l'opposé dans le sens périphérique (101),
- dans lequel la saillie (14) respective est en prise dans un état prémonté dans le pot de boîtier (4) avec le support (13) afférent de telle manière que la saillie (14) repose axialement sur le fond de support (15) afférent et soit fixée au moyen des branches (16) afférentes dans le sens périphérique (101) de sorte que l'élément de filtration (7) soit centré dans le pot de boîtier (4) et maintenu axialement vers l'ouverture de pot (10),
**caractérisé en ce que**
- un élément de fixation (17) est agencé au niveau du pot de boîtier (4), élément qui est réglable vers l'élément de filtration (7),
- l'élément de filtration (7) est maintenu dans l'état réglé vers l'élément de filtration (7) de l'élément de fixation (17) au moyen de l'élément de fixation (17) axialement éloigné de l'ouverture de pot (10) dans le pot de boîtier (4).

2. Dispositif de filtration selon la revendication 1,
**caractérisé en ce que**
l'élément de filtration (7) et le pot de boîtier (4) sont formés de telle manière que
l'élément de filtration (7) soit inséré pour l'atteinte de l'état prémonté par l'ouverture de pot (10) axialement dans le pot de boîtier (4), tourné dans le sens périphérique (101) et déplacé axialement vers l'ouverture de pot (10).

3. Dispositif de filtration selon la revendication 1 et 2,
**caractérisé en ce que**
le dispositif de filtration (1) est configuré de telle manière que l'élément de fixation (17) soit réglé après le déplacement de l'élément de filtration (7) axialement vers l'ouverture de pot (10) par rapport à l'élément de filtration (7) afin de maintenir l'élément de filtration (10) axialement loin de l'ouverture de pot (10) dans le pot de boîtier (4).

4. Dispositif de filtration selon l'une quelconque des revendications 1 à 3,
**caractérisé en ce que**
l'élément de fixation (17) est réglable axialement au niveau du pot de boîtier (4).

5. Dispositif de filtration selon l'une quelconque des revendications 1 à 4,
**caractérisé en ce que**
- le fond de pot (8) présente une ouverture fonctionnelle (18),
- l'élément de fixation (17) est formé comme un élément de fermeture (19) réglable dans l'ouverture fonctionnelle (18), en particulier comme une vis (20).

6. Dispositif de filtration selon l'une quelconque des revendications 1 à 5,
**caractérisé en ce que**
au moins un des au moins un élément de retenue antagoniste (12), en particulier l'élément de retenue antagoniste (12) respectif est formé comme une saillie (14).

7. Dispositif de filtration selon l'une quelconque des revendications 1 à 6,
**caractérisé en ce que**
- l'élément de filtration (7) présente un milieu filtrant (21) pour la filtration d'un fluide, en particulier d'un liquide, ainsi qu'au niveau d'au moins un côté frontal (22) axial un disque d'extrémité (23),
- au moins un des au moins un élément de retenue antagoniste (12) dépasse radialement d'un des au moins un disque d'extrémité (23).

8. Dispositif de filtration selon la revendication 7,
**caractérisé en ce que**
- l'élément de filtration (7) présente un disque d'extrémité (23, 23a) supérieur tourné vers le fond de pot (8) et un disque d'extrémité (23, 23b) inférieur éloigné du fond de pot (8),
- au moins un des au moins un élément de retenue antagoniste (12) dépasse radialement du disque d'extrémité (23, 23b) inférieur.

9. Dispositif de filtration selon l'une quelconque des revendications 1 à 8,
**caractérisé en ce que**
la tête de boîtier (5) présente un fond de tête (24) opposé axialement au fond de pot (8) ainsi qu'une tubulure (25) dépassant axialement du fond de tête (24), tubulure qui s'engage axialement dans un volume d'élément (26) de l'élément de filtration (7) de sorte que le volume d'élément (26) soit relié de manière fluidique à la tubulure (25).

10. Dispositif de filtration selon la revendication 9,
**caractérisé en ce que**
une garniture annulaire (28) est agencée radialement entre la tubulure (25) et un côté intérieur (27) radial de l'élément de filtration (7), garniture qui rend étanche de manière fluidique le volume d'élément (26).

11. Dispositif de filtration selon l'une quelconque des revendications 1 à 10,
**caractérisé en ce que**
le dispositif de filtration (1) présente au moins deux éléments de retenue (11) et des éléments de retenue antagonistes (12) afférents qui sont espacés les uns des autres dans le sens périphérique (101).

12. Dispositif de filtration selon l'une quelconque des revendications 1 à 11,
**caractérisé en ce que**
au moins un des au moins un support (13) présente des branches (16) qui dépassent différemment loin du fond de support (15).

13. Dispositif de filtration selon l'une quelconque des revendications 1 à 12,
**caractérisé en ce que**
au moins une des au moins une saillie (14) est formée comme une coquille (37) axialement ouverte.

14. Dispositif de filtration selon l'une quelconque des revendications 1 à 13,
**caractérisé en ce que**
le pot de boîtier (4) et la tête de boîtier (5) sont reliés entre eux de manière amovible au moyen d'une liaison vissée (30) ou d'une liaison à baïonnette (36).
